# EUROPÄISCHE PATENTANMELDUNG

(11) **EP 1 911 504 A2**
(43) Veröffentlichungstag der Anmeldung: **16.04.2008**
(21) Anmeldenummer: 07014647.7
(22) Anmeldetag: 26.07.2007
(51) Int. Cl.: B01D 46/42

(54) **Luftdurchtrittsvorrichtung mit Steuerelement**

(30) Priorität: 12.10.2006 DE 202006015789 U
(71) Anmelder: Pfannenberg GmbH, 21035 Hamburg (DE)
(72) Erfinder: Pfannenberg, Andreas, 21035 Hamburg (DE)
(74) Vertreter: Richter, Werdermann, Gerbaulet & Hofmann

(57) **Zusammenfassung**

Die Erfindung betrifft eine Luftdurchtrittsvorrichtung (200), insbesondere Filterlüfter oder Austrittsfilter, mit einem Gebläse (20) oder ohne Gebläse, für den Einbau in eine Montagedurchbrechung (50) in einer Wand (51), insbesondere eines Gehäuses für Abwärme erzeugenden Bauteilen, wie Schaltschrank, Elektronikschrank, Computersystem o. dgl., wobei die Luftdurchtrittsvorrichtung (200) ein Grundgehäuse (21) mit oder ohne einem Gebläseträger (25), eine als Designdeckel (80) mit oder ohne luftaustrittseitig angeformten und umlaufenden, in das Grundgehäuse (21) einführbaren Seitenwänden (30a, 30b, 30c, 30d) und mit an den sich gegenüberliegenden Seitenwänden (30b, 30d) des Designdeckels (80) gehaltenen Lamellenelemente (90, 90') aufweisenden Lüftungsgitter (10) ausgebildete Abdeckvorrichtung (100) und eine zwischen dem Grundgehäuse (21) und dem Lüftergitter (10) angeordneten Filtermatte (60) umfasst. Aufgabe der vorliegenden Erfindung ist es, eine Luftdurchtrittsvorrichtung gemäß der eingangs beschriebenen Art so auszubilden, dass möglich ist, deren korrekten Betriebszustand zu überprüfen ohne den Lüfter zu demontieren oder den Sitz des Lüfters zu überprüfen. Gelöst wird diese Aufgabe dadurch, dass eine Kontrolleinrichtung vorgesehen ist, mit der der korrekte Betriebszustand der Luftdurchtrittsvorrichtung (200) ermittelbar ist, wobei die Kontrolleinrichtung (300) wenigstens ein Überwachungselement (360) und wenigstens ein Steuerelement (330) zum Bestimmen des Betriebszustands beinhaltet.

## Beschreibung

Die Erfindung betrifft eine Luftdurchtrittsvorrichtung, insbesondere Filterlüfter oder Austrittsfilter, gemäß dem Oberbegriff des Anspruches 1.

Bei in einem Gehäuse angeordneten Bauteilen, welche entsprechende Abwärme erzeugen, ist es notwendig, die Abwärme aus dem Gehäuse abzuführen und eine Temperatur in dem Gehäuse durch mehr oder weniger starkes Einblasen oder Absaugen von Umgebungsluft in den Gehäuseinnenraum mittels des Lüfters zu kontrollieren. Ein bekanntes Beispiel hierfür sind Computergehäuse. Üblicherweise werden derartige Gehäuse mit einem Filterlüfter versehen, welcher entweder ständig läuft oder von einer Steuerung in Abhängigkeit von einer Temperatur im Gehäuse an- und abgeschaltet wird. Der Filterlüfter ist in einer Ausnehmung einer Wandung des Gehäuses angeordnet und beispielsweise mittels Schraubverbindungen fixiert. Gleichzeitig sind an einer anderen Stelle des Gehäuses für einen Luftaustritt entsprechende Luftaustrittsschlitze vorgesehen.

Aufgrund der elektrostatischen Aufladung der elektronischen Bauteile und Komponenten, die im Inneren des Gehäuses angeordnet sind, lagern sich an ihnen Schmutz- und Staubpartikel an, so dass Fehlfunktionen der Bauteile auftreten können. Zur Vermeidung der Verschmutzung ist es bekannt, im Lüfter eine zusätzliche Filtermatte vorzugsweise aus einem gewirkten oder vernadelten Kunststoffmaterial vorzusehen, um diese Staub- und Schmutzpartikel aus der durch den Lüfter in einer Strömungsrichtung hindurch geförderten Luft herauszufiltern. Hierfür ist vorzugsweise in Strömungsrichtung der Luft gesehen vor dem Gebläse des Lüfters eine Filtermatte angeordnet wobei ein Zwischenraum zwischen der Filtermatte und dem Gebläse von einem Grundgehäuse und einem Gebläseträger gegen die Umgebung im Wesentlichen luftdicht abgeschlossen ist. Die bei diesen Filterlüftern verwendeten Filtermatten sind zwischen dem äußeren Lüftergitter und dem Grundgehäuse angeordnet. Das Lüftergitter ist vermittels Klemm- oder Rastverbindungen oder Schraubverbindungen mit dem Grundgehäuse lösbar verbunden.

Es ist wünschenswert, dass es für den Nutzer der Wärme erzeugenden Bauteile auf einfache Weise möglich ist, zu überprüfen, ob der Betrieb entsprechend den gewünschten Parametern erfolgt. Der Luftdurchsatz muss dabei gewährleistet sein, gleichzeitig muss allerdings auch gewährleistet sein, dass die Filterwirkung den gewünschten Anforderungen entspricht. Diese ist immer dann nicht gegeben, wenn der Filter verschmutzt ist, bzw. wenn das Lüftergitter nicht richtig geschlossen ist und damit ungefilterte Luft hindurch treten kann.

Aufgabe der vorliegenden Erfindung ist es, eine Luftdurchtrittsvorrichtung gemäß der eingangs beschriebenen Art so auszubilden, dass möglich ist, deren korrekten Betriebszustand zu überprüfen ohne den Lüfter zu demontieren oder den Sitz des Lüfters zu überprüfen.

Gelöst wird diese Aufgabe bei einer Luftdurchtrittsvorrichtung mit den im Anspruch 1 angegebenen Merkmalen.

Durch das Vorsehen der Kontrolleinrichtung wird es auf einfache Weise möglich, schnell und effizient zu überwachen, ob sich der Betriebszustand der Luftdurchtrittsöffnung innerhalb der gewünschten Parameter oder außerhalb davon befindet. Das Überwachungselement stellt dabei die notwendigen Daten an die Steuereinheit bereit, in der der Betriebszustand bzw. die Abweichung davon ermittelt wird.

Vorteilhafte Ausgestaltungen der Erfindung sind Gegenstand der Unteransprüche.

Mittels Kontaktschalter, insbesondere Mikroschalter, lässt sich einfach bestimmen, ob die Luftdurchtrittsvorrichtung ordnungsgemäß geschlossen ist. Auch kann durch sie einfach bestimmt werden, ob überhaupt ein Filter in die Vorrichtung eingelegt ist.

Beispielsweise sieht eine Lehre der Erfindung vor, dass es möglich ist, dass zur Messung von Luftdrücken Piezokristalle verwendet werden, die druckabhängige elektrische Signale liefern, die wiederum in der vorzugsweise elektronisch operierenden Steuerreinheit ausgewertet und beispielsweise mittels einem Anzeigeelement dem Nutzer angezeigt wird. Es kann aber auch ein mechanischer Abgriff des Luftdrucks erfolgen und die Druckdifferenz mit mechanischen Anzeigevorrichtungen angezeigt werden.

Es versteht sich, dass mit zunehmender Verschmutzung die Druckdifferenz in Strömungsrichtung gesehen vor und hinter der Filtermatte stetig zunimmt, wobei einem Grenzwert einer Druckdifferenz eine maximal zulässige Verschmutzung der Filtermatte zuordenbar ist. Das bedeutet, dass bei diesem Grad der Verschmutzung nur noch eine so geringe Luftmenge vom Gebläse des Lüfters durch die Filtermatte hindurch förderbar ist, dass eine ausreichende Belüftung bzw. Abkühlung der im Gehäuse beispielsweise des Computersystems angeordneten elektronischen Bauteile nicht mehr gewährleistet ist und deren Beschädigung nicht ausgeschlossen werden kann. Sobald eine derartige Verschmutzung der Filtermatte erreicht ist muss diese zum störungsfreien Betrieb des Lüfters bzw. des damit belüfteten Computersystems ausgetauscht werden. Das Erreichen dieser Verschmutzung bzw. des damit ansteigenden Druckabfalls wird dem Nutzer über geeignete Anzeigevorrichtungen mitgeteilt.

Durch die Anzeige, ob die Filtermatte des Lüfters ausgetauscht werden muss, wird eine unnötige Kontrolle der Filtermatte auf Verschmutzung, die unter Umständen mit aufwändigen Demontagearbeiten am Lüfter und insbesondere mit Stillstandszeiten beispielsweise des Computersystems verbunden ist, vermieden, so dass die Betriebskosten des gesamten Systems verringert werden. Auch kann der Lüfter in Räumen mit unterschiedlichem Raumklima oder unterschiedlichen Luftverschmutzungen eingesetzt werden. Es versteht sich, dass die Druckdifferenz für eine maximal zulässige Verschmutzung auch für eine geänderte Gebläseleistung einstellbar ist.

In bevorzugter Weise ist ein Ausgabeelement vorgesehen, über das der Eintritt eines Ereignisses, wie bspw. das Überschreiten einer Druckdifferenz oder das Signal des Kontaktschalters, optisch und/oder akustisch ausgebbar ist. Dies kann auch dadurch erfolgen, dass eine von Druckmessvorrichtungen ermittelte Druckdifferenz mit einem Dezimalwert auf einem Display ausgegeben wird, wobei bei Überschreiten eines Grenzwerts für die Druckdifferenz beispielsweise der Zahlenwert zu blinken anfängt. Ebenso ist es möglich, dass eine Warnleuchte, z. B. eine rote LED, aufleuchtet. Weiterhin kann das Warnsignal durch Ausgabe eines Signaltons gegeben werden. Ebenso ist es möglich, dass unterschiedlichen Verschmutzungsgraden der Filtermatte und dementsprechend unterschiedlichen Werten der Druckdifferenz farblich unterschiedliche Lichtsignale zugeordnet sind. Beispielsweise kann bei einer sauberen unverschmutzten Filtermatte und einer dementsprechend geringen Druckdifferenz eine grüne Leuchtdiode aktiviert sein, bei zunehmender Verschmutzung eine gelbe Leuchtdiode und bei Überschreiten eines zulässigen Grenzwertes für die Verschmutzung und einer dementsprechend großen Druckdifferenz eine rote Leuchtdiode.

Durch das Anordnen des Steuerelements auf der Innenwand des Grundgehäuses der Vorrichtung wird sichergestellt, dass der lichte Durchtrittsquerschnitt nicht reduziert werden muss. Das Steuerelement besteht bevorzugt aus elektronischen Bauteilen, die u. U. bereits kostengünstig auf dem Markt erhältlich sind.

Um eine einfache Stromversorgung des Steuerelements und der weiteren Bauteile der erfindungsgemäßen Vorrichtung zu erreichen, sind Anschlusselemente zur Bereitstellung der Stromzufuhr vorgesehen. Gleiches gilt auch für Anschlüsse zur Signalausgabe beispielsweise zu einem externen Ort wie einem PC o. ä..

Ausführungsbeispiele der Erfindung sind in den Zeichnungen dargestellt. Es zeigen:
- Fig. 1: eine schaubildliche Explosionsdarstellung der Luftdurchtrittsvorrichtung, bestehend aus einem vorderen Designdeckel mit einem Lüftergitter und mit einer Filtermatte, einem Grundgehäuse für den Designdeckel und für einen Ventilator,
- Fig. 2: eine schaubildliche Darstellung des Grundgehäuses mit aufgeklapptem Designdeckel und mit einer zwischen dem Grundgehäuse und dem Designdeckel liegenden Filtermatte,
- Fig. 3: einen senkrechten Schnitt durch die Luftdurchtrittsvorrichtung,
- Fig. 4: eine erste räumliche Ansicht der Luftdurchtrittsvorrichtung,
- Fig. 5: eine zweite räumliche Ansicht der Luftdurchtrittsvorrichtung,
- Fig. 6: eine Draufsicht auf ein Deckelelement der Luftdurchtrittsvorrichtung,
- Fig. 7: eine weitere räumliche Ansicht einer weiteren Luftdurchtrittsvorrichtung,
- Fig. 8: einen Ausschnitt einer weiteren räumlichen Ansicht der Luftdurchtrittsvorrichtung,
- Fig. 9: eine weitere Ansicht zu Fig. 8,
- Fig. 10: eine vergrößerte geschnittene Abschnittsansicht der Luftdurchtrittsvorrichtung,
- Fig. 11: eine weitere vergrößerte geschnittene Abschnittsansicht der Luftdurchtrittsvorrichtung,
- Fig. 12: eine weitere vergrößerte geschnittene Abschnittsansicht der Luftdurchtrittsvorrichtung zu Fig. 10,
- Fig. 13: eine weitere vergrößerte geschnittene Abschnittsansicht der Luftdurchtrittsvorrichtung zu Fig. 11,
- Fig. 14: eine Draufsicht auf ein alternatives Deckelelement der Luftdurchtrittsvorrichtung,
- Fig. 15: eine Rückansicht eines Deckelelements mit eingesetzter Filtermatte und
- Fig. 16: eine vergrößerte Abschnittsansicht des Deckelelements gemäß Fig. 15 ohne Filtermatte.

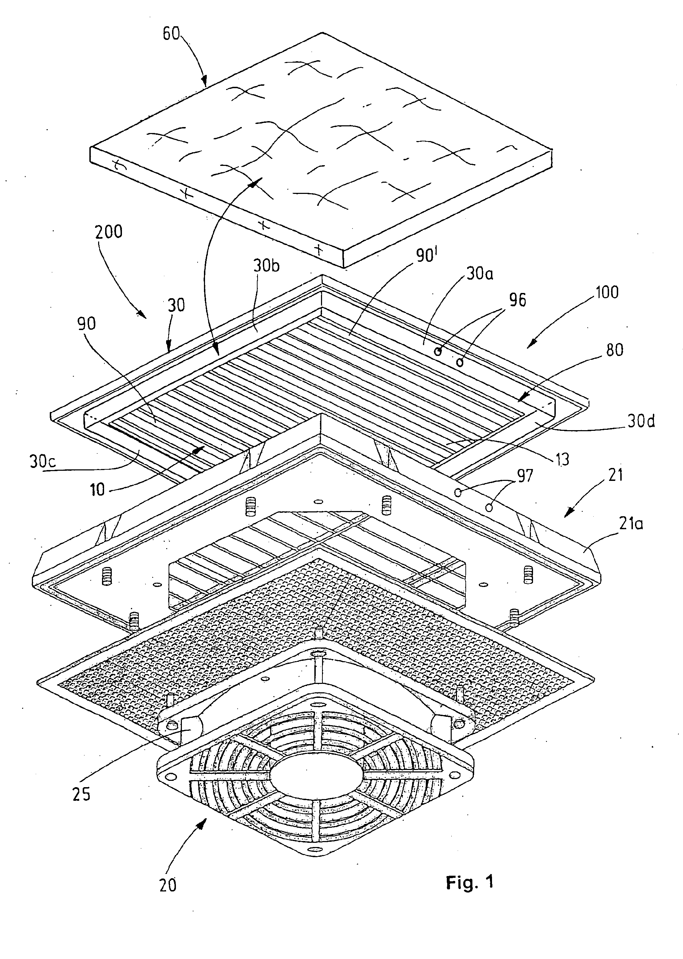

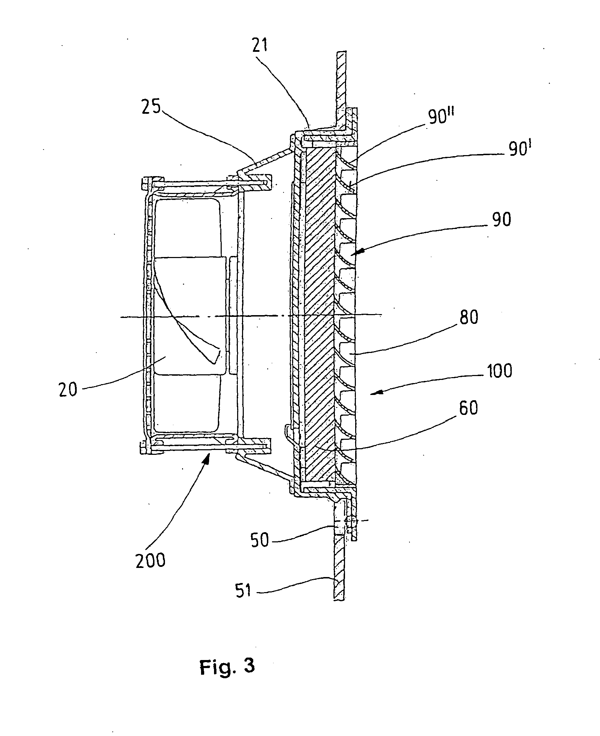

Fig. 1 bis 3 zeigen einen prinzipiellen Aufbau einer Luftdurchtrittsvorrichtung 200 ohne den Einsatz einer erfindungsgemäßen Überwachungsvorrichtung. Fig. 1 zeigt eine Explosionsansicht dazu. Die Luftdurchtrittsvorrichtung 200 ist dabei in Verbindung mit einem Gebläse bzw. Ventilator als Filterlüfter und ohne Gebläse 20 als Austrittsfilter einsetzbar. Eingesetzt wird die Luftdurchtrittsvorrichtung 200 bei Gehäusen von abwärmeerzeugenden Bauteilen, wie Schaltschränke, Elektronikschränke, Computersystemen o. dgl., wobei die Luftdurchtrittsvorrichtung 200 in Montagedurchbrechungen 50 in einer Wand 51 eines derartigen Gehäuses eingebaut wird (Fig. 3).

Die wesentlichen Bauteile der Luftdurchtrittsvorrichtung 200 sind ein Designdeckel 80 mit einem Lüftergitter 10 mit Lüftungsschlitzen, das die vordere Abdeckvorrichtung 100 für ein Grundgehäuse 21 bildet, ein Gebläseträger 25 für das Gebläse 20, wenn die Luftdurchtrittsvorrichtung 200 als Filterlüfter eingesetzt wird (Fig. 1 bis 3). Das Gebläse 20 ist mit Gebläsegittern 22 abgedeckt.

Die Abdeckvorrichtung 100, die das Lüftergitter 10 bildet, ist als Designdeckel 80 ausgebildet und besteht aus einem rahmenartigen Gehäuse 30 bevorzugter Weise mit Seitenwänden 30a, 30b, 30c, 30d und mit Lamellenelementen 90, wobei zwischen den sich abschnittsweise überlappenden Lamellenelementen 90 Lüftungsschlitze ausgebildet sind. Die Filtermatte 60 kann an der Innenwandfläche des Lüftergitters 10 in dem Designdeckel 80 gehalten sein (Fig. 3) oder sie wird in das Grundgehäuse 21 eingelegt, das mittels des Designdeckels 80 verschlossen wird. Die Lamellenelemente 90 sind in zwei sich gegenüberliegenden Seitenwänden 30b, 30d des rahmenartigen Gehäuses 30 des Designdeckels 80 gehalten bzw. an diese Seitenwände angeformt. Die Abdeckvorrichtung 100 mit dem Lüftergitter 10 besteht aus dem rahmenartigen Gehäuse 30, das die Filtermatte 60 aufnimmt, einem in dem Gehäuse 30 fest, lösbar oder verschwenkbar gehaltenen und die Filtermatte 60 abdeckenden Lüftergitter 10, das den Designdeckel 80 bildet. Dieses Lüftergitter 10 umfasst mindestens zwei laterale, sich randseitig in einer Längsrichtung erstreckende, vorzugsweise wangenförmig ausgebildeten Seitenwänden 30b, 30d, zwischen denen die Lamellenelemente 90 angeordnet sind.

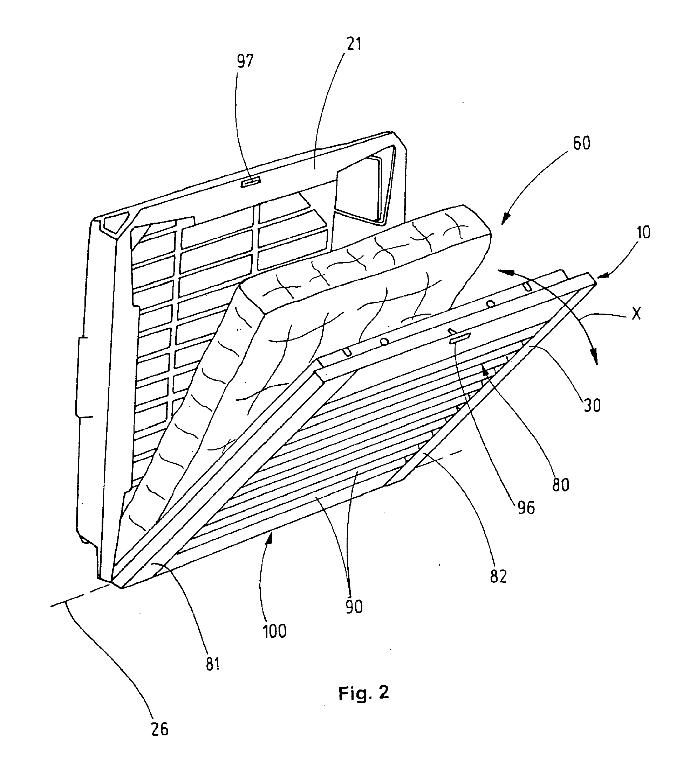

Der die Filtermatte 60 aufnehmende Designdeckel 80 bzw. das Lüftergitter 10 ist zum Öffnen der Aufnahmekammer für die Filtermatte zwischen dem Lüftergitter 10 und dem Grundgehäuse 21 um seine bodenseitige Schwenkachse 26 in Pfeilrichtung X verschwenkbar (Fig. 2). Das Arretieren des Lüftergitters 10 an dem Grundgehäuse 21 erfolgt bevorzugter Weise im oberen Bereich z. B. vermittels einer Arretierungsvorrichtung 40, bevorzugter Weise aus den Bauteilen 96, 97, die als Rastnocken und Einrastelementen ausgebildet sind (Fig. 2). Die Betätigung der Arretierungsvorrichtung 40 erfolgt vermittels Lamellenelementen 90' oder eines Lamellenelementes 90" der Lamellenelemente 90 des Lüftergitters 10.

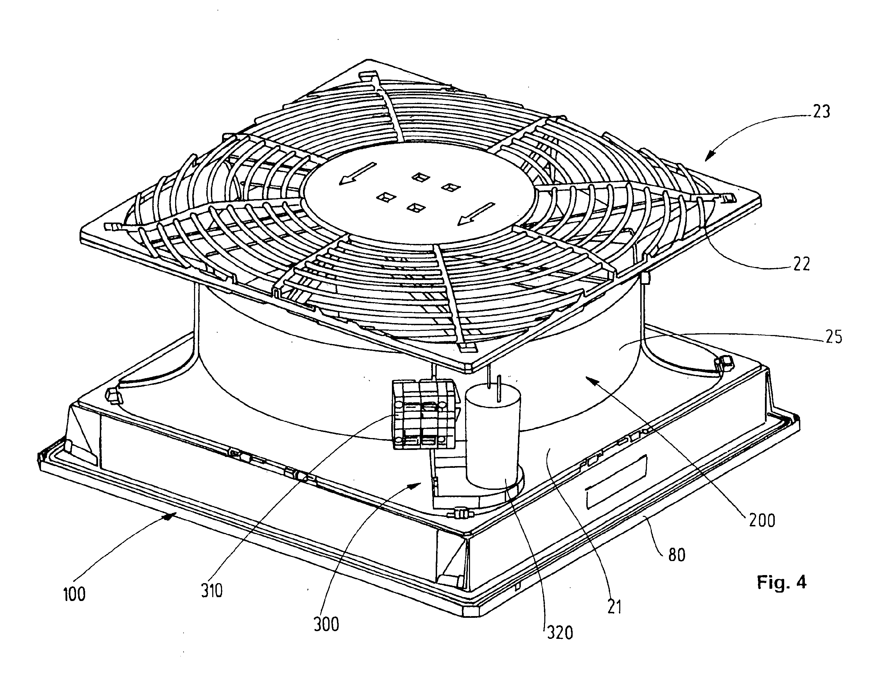

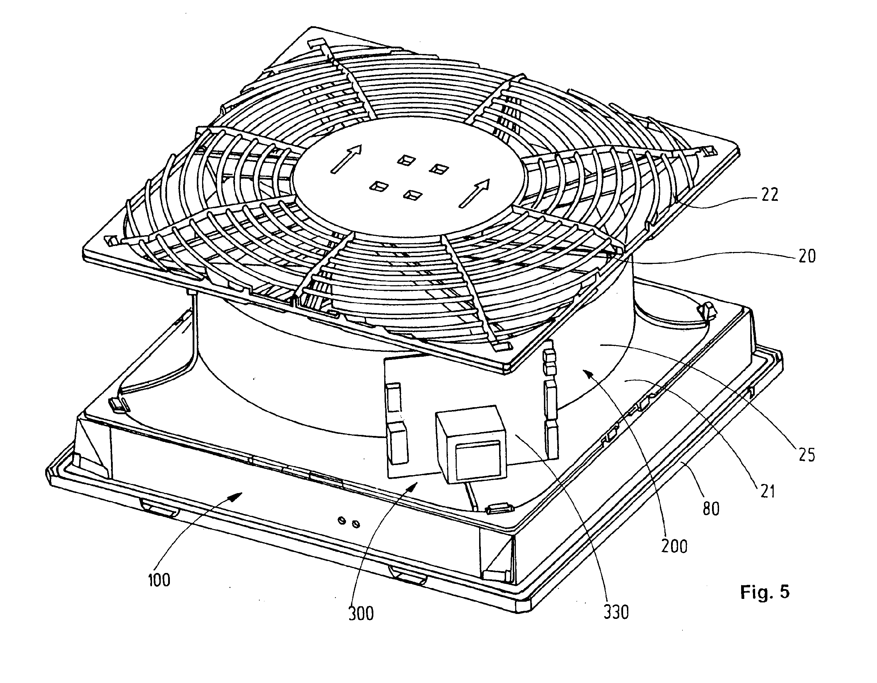

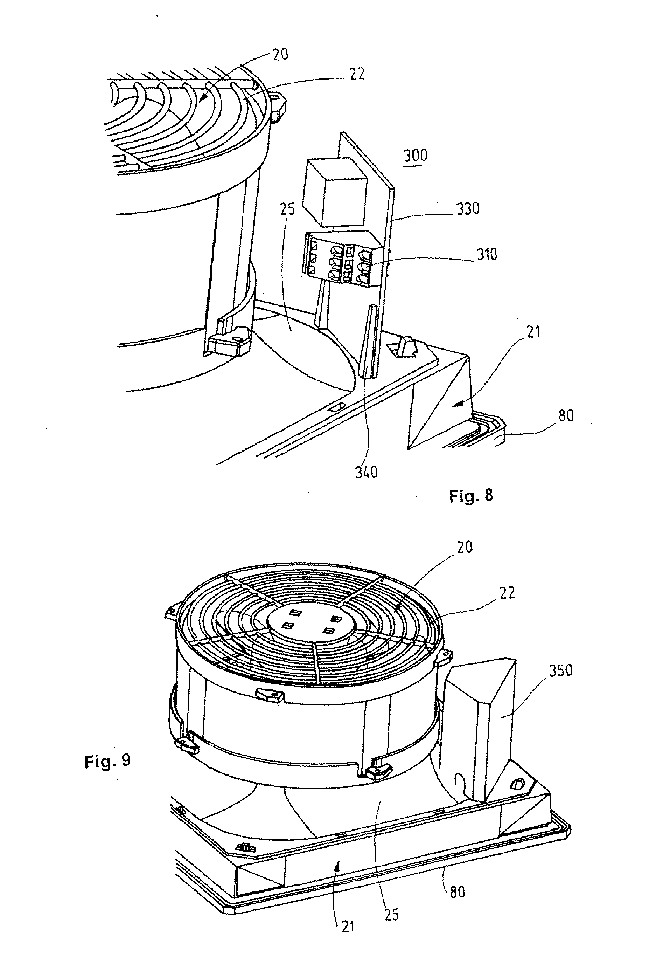

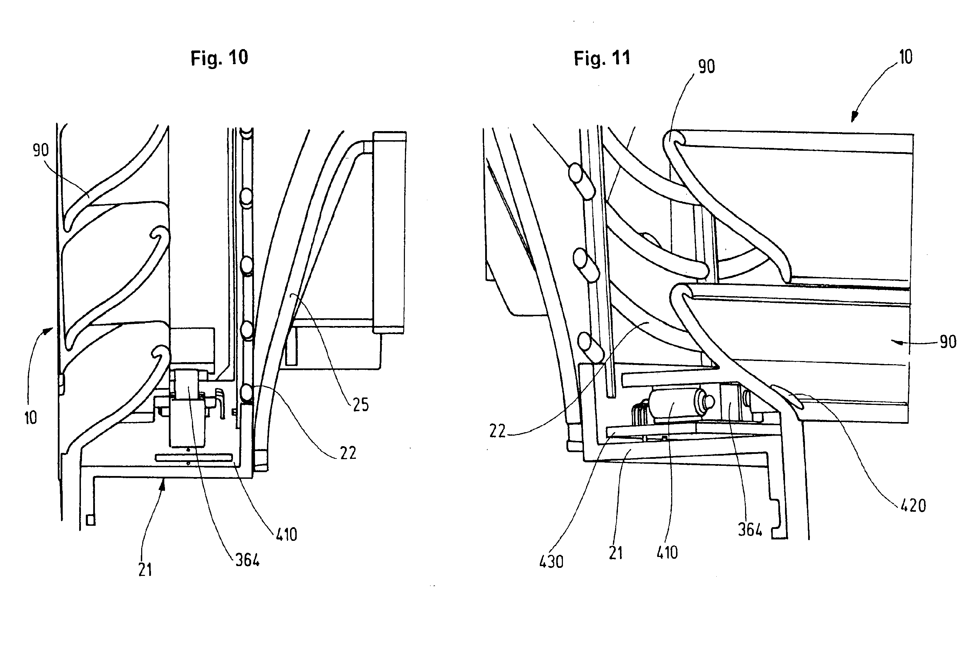

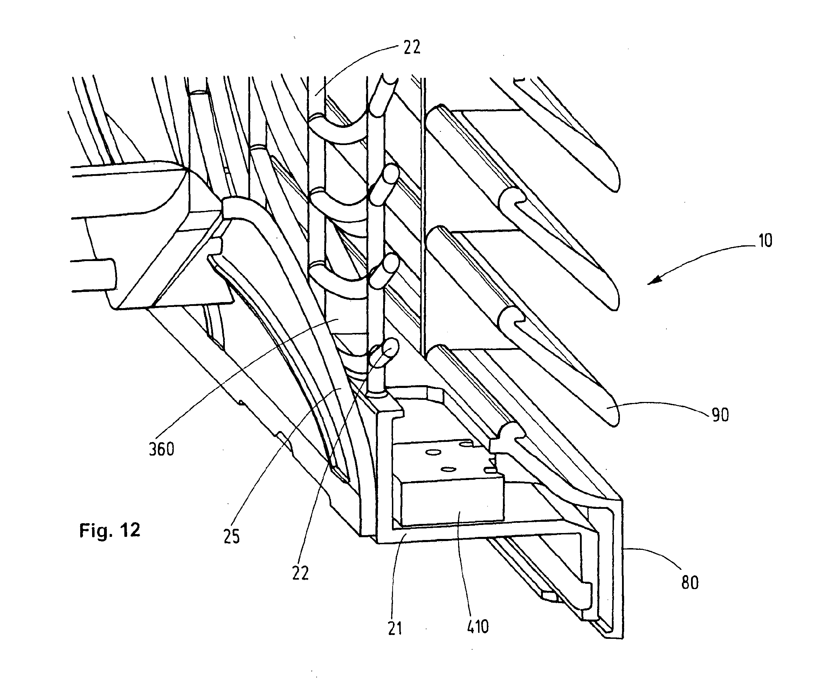

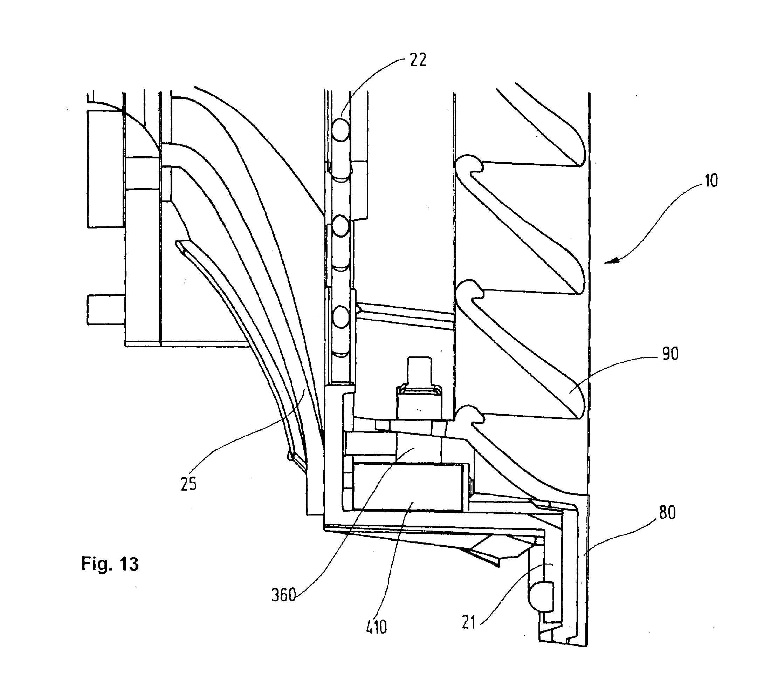

Fig. 4 und 5 zeigen eine erfindungsgemäße Luftdurchtrittsvorrichtung 200, die mit einer Kontrolleinrichtung 300 in Form einer elektronischen Steuerung bestehend aus Anschlusselement 310, Stromversorgung 320, Platine 330, die mittels Halterung 340 (siehe Fig. 8) am Grundgehäuse 21 befestigt ist. Die Platine 330 umfasst elektronische Bauteile, die Signale auswertet, die von Mikroschaltern 360 (Fig. 10 bis Fig. 16) bei Eintritt eines Ereignisses oder auch kontinuierlich (Drucküberwachung, nicht dargestellt) ausgegeben werden.

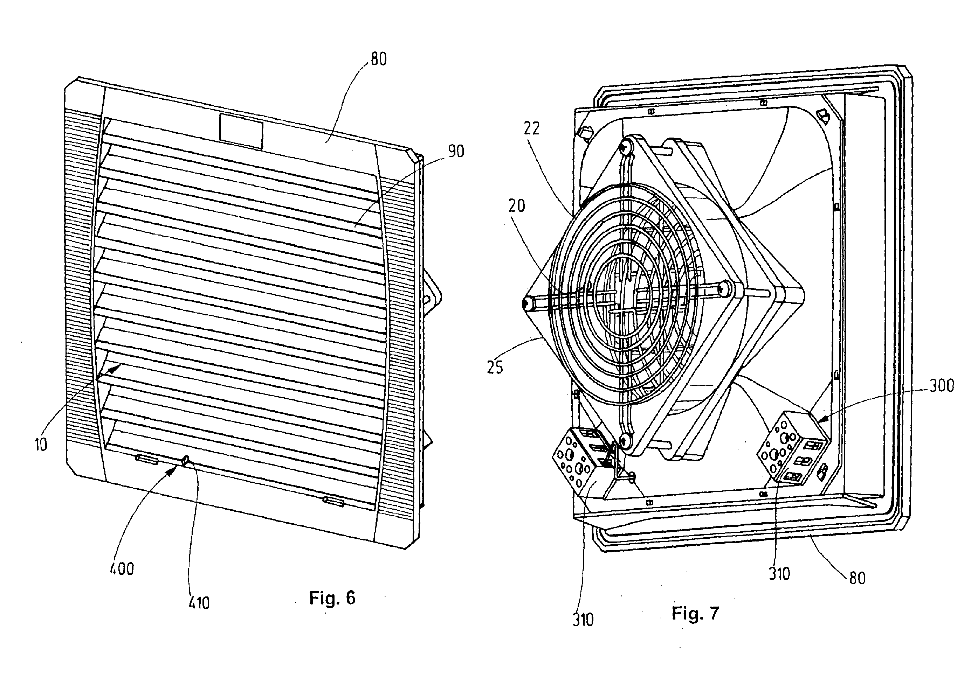

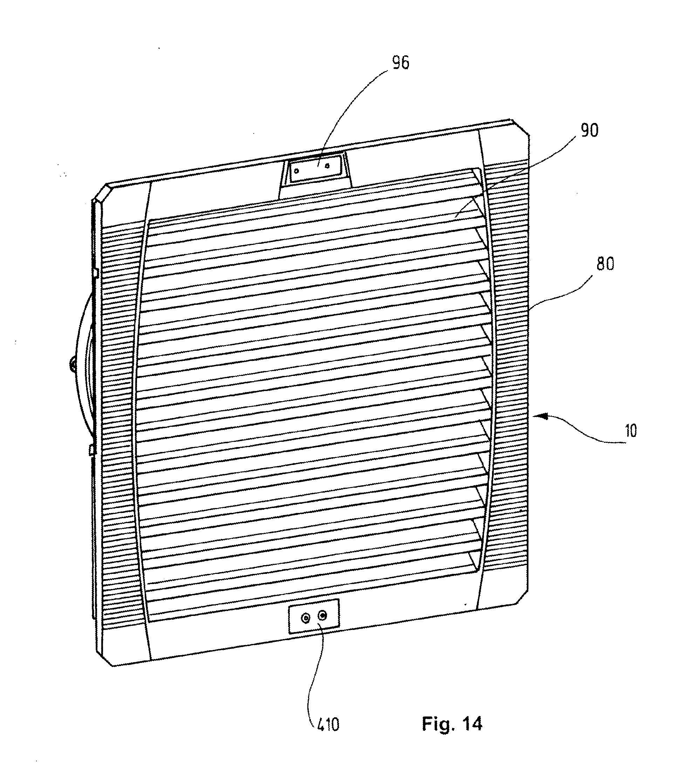

Fig. 6 und 14 zeigen Ausführungsformen für den Designdeckel 80, der mit einem Ausgabeelement 400 versehen ist, das mit der Kontrolleinrichtung verbunden ist. Bei dem Ausgabeelement 400 handelt es sich um eine farbige Leuchte oder eine ein- oder mehrfarbige LED 410. Je nach Farbe oder ob die LED 410 überhaupt leuchtet wird angezeigt, ob der Betriebszustand der Luftdurchtrittsvorrichtung 200 den gewünschten Parametern entspricht oder ob Abweichungen davon gegeben sind, die ein Handeln des Anwenders erfordern. Die LED ist dabei entweder versetzt oder zentrisch angeordnet. Auch könne zwei LEDs eingesetzt werden, die dann die unterschiedlichen Betriebszustände anzeigen.

Fig. 11 zeigt eine mögliche Anordnung der LED im Bereich des Designdeckels 80 bzw. des Lüftergitters 10. Die LED 410 ist dabei auf einer Platine 430 angeordnet, die sich in Verbindung mit dem Grundgehäuse 21 befindet. Die Anordnung erfolgt dabei so, dass entweder das Licht der LED 410 durch eine Öffnung 420 nach außen hindurch treten kann, oder dass die LED 410 direkt in die Öffnung 420 hineinragt.

Parallel zur LED 410 in Fig. 11 und 10 ist ein Mirkoschalter 364 angeordnet, der mit dem Designdeckel 80 schaltend in Verbindung steht. Wird, wie zuvor beschrieben der Designdeckel 80 geöffnet, schaltet der Mirkoschalter 364 frei und die Steuerung erhält ein Signal, aufgrund dessen nach der Signalauswertung die LED 410 geschaltet wird, so dass sie anzeigt, dass die Luftdurchtrittsvorrichtung 200 nicht ordnungsgemäß geschlossen ist.

Fig. 7 zeigt eine weitere Ausführungsform der erfindungsgemäßen Luftdurchtrittsvorrichtung 200. Dabei sind zwei Anschlusselemente 310 vorgesehen, die zum einen zur Stromzufuhr und zum anderen zur Signalabgabe an ein Ausgabeelement 400 dienen.

In Fig. 8 ist eine Anordnung der Platine 330 auf dem mit dem Grundgehäuse 21 verbundenen Gebläseträger 25 dargestellt. Der Gebläseträger 25 ist in das Grundgehäuse eingerastet. Die Platine 330 steht senkrecht zum Verbindungsbereich von Grundgehäuse 21 und Gebläsegehäuse 25 in einem Abschnitt des Gebläsegehäuses 25, der parallel zum Grundgehäuse 21 ist. Auf der Platine 330 ist ein Anschlusselement 310 vorgesehen. Die Leitungen zu anderen Bauteilen der Überwachungsvorrichtung 300 sind nicht dargestellt. Die Befestigung erfolgt mit einer Halterung 340. In Fig. 9 ist die Platine 330 nebst Anschlusselement 310 mit einer Abdeckung 350 abgedeckt.

Neben dem Mikroschalter 364 zeigen Fig. 12 und 13 sowie Fig. 15 und 16 einen weiteren Mikroschalter 360, der eine Überwachung gewährleistet, ob eine Filtermatte 60 in die Luftdurchtrittsvorrichtung 200 eingelegt ist.

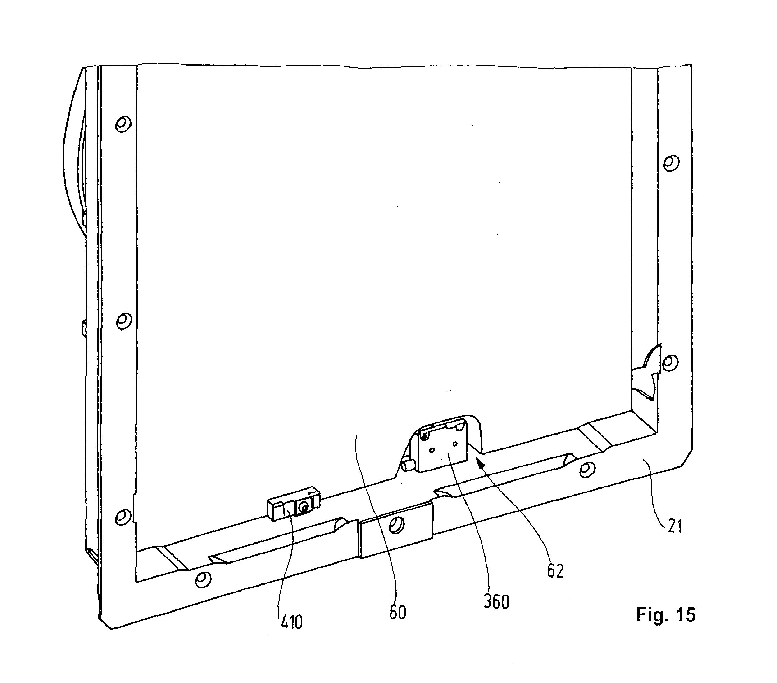

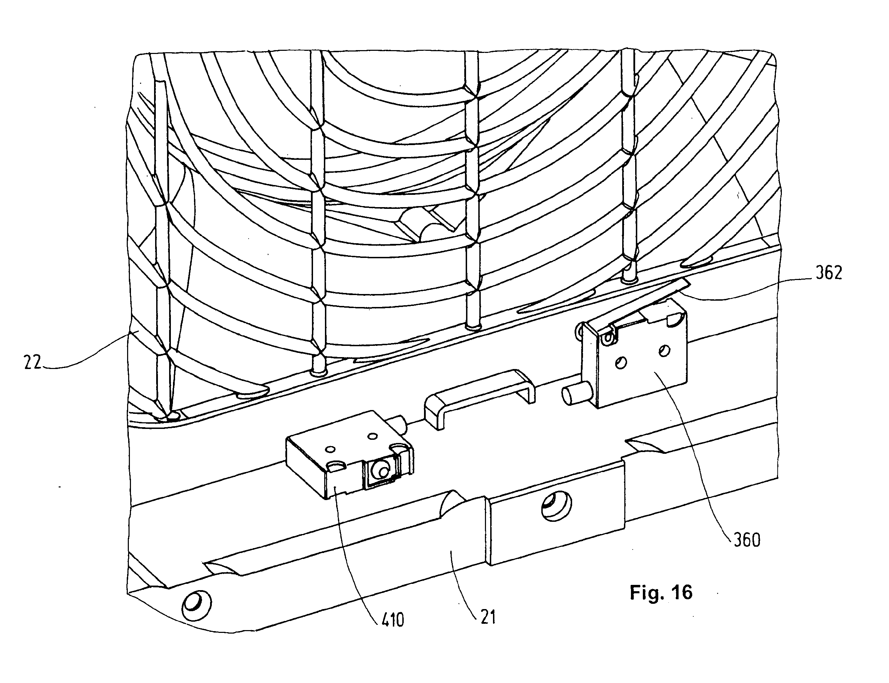

Fig. 15 zeigt dabei eine Rückansicht des Grundgehäuses 21, in das eine Filtermatte 60 eingesetzt ist. Im unteren Abschnitt der Filtermatte 60 befindet sich eine Aussparung 62, in deren Bereich der Mikroschalter 360 vorgesehen ist. Wie in Fig. 16 zu sehen ist, umfasst der Mikroschalter 360 einen Schaltmechanismus 362, auf dem wie in Fig. 15 zu sehen ist, die Filtermatte 60 aufliegt, wodurch ein Signal an die Kontrolleinrichtung 300 übermittelt wird, aus dem diese die Information ermittelt, dass eine Filtermatte eingesetzt ist, und daraufhin ein entsprechenden Signal an die Ausgabeeinheit zur Anzeige übermittelt.

## Patentansprüche

1. Luftdurchtrittsvorrichtung, insbesondere Filterlüfter oder Austrittsfilter, mit einem Gebläse (20) oder ohne Gebläse, für den Einbau in eine Montagedurchbrechung (50) in einer Wand (51), insbesondere eines Gehäuses für Abwärme erzeugenden Bauteilen, wie Schaltschrank, Elektronikschrank, Computersystem o. dgl., wobei die Luftdurchtrittsvorrichtung (200) ein Grundgehäuse (21) mit oder ohne einem Gebläseträger (25), eine als Designdeckel (80) mit oder ohne luftaustrittseitig angeformten und umlaufenden, in das Grundgehäuse (21) einführbaren Seitenwänden (30a, 30b, 30c, 30d) und mit an den sich gegenüberliegenden Seitenwänden (30b, 30d) des Designdeckels (80) gehaltenen Lamellenelemente (90, 90') aufweisenden Lüftungsgitter (10) ausgebildete Abdeckvorrichtung (100) und eine zwischen dem Grundgehäuse (21) und dem Lüftergitter (10) angeordneten Filtermatte (60) umfasst,
**dadurch gekennzeichnet,**
**dass** eine Kontrolleinrichtung vorgesehen ist, mit der der korrekte Betriebszustand der Luftdurchtrittsvorrichtung (200) ermittelbar ist, wobei die Kontrolleinrichtung (300) wenigstens ein Überwachungselement (360) und wenigstens ein Steuerelement (330) zum Bestimmen des Betriebszustands beinhaltet.

2. Luftdurchtrittsvorrichtung nach Anspruch 1,
**dadurch gekennzeichnet,**
**dass** es sich bei dem Überwachungselement (360) um einen Kontaktschalter, bevorzugt einen Mikroschalter, handelt.

3. Luftdurchtrittsvorrichtung nach Anspruch 1 oder 2,
**dadurch gekennzeichnet,**
**dass** es sich bei dem Überwachungselement um einen Drehzahlüberwachung des Gebläses (20) handelt.

4. Luftdurchtrittvorrichtung nach einem der Ansprüche 1 bis 3,
**dadurch gekennzeichnet,**
**dass** es sich bei dem Überwachungselement um wenigstens eine, bevorzugt wenigstens zwei, Druckmessvorrichtungen handelt.

5. Luftdurchtrittvorrichtung nach Anspruch 3,
**dadurch gekennzeichnet,**
**dass** ein Ausgabeelement (410) vorgesehen ist, wobei es sich bevorzugt bei dem Ausgabeelement (410) um eine Leuchte, besonders bevorzugt eine LED, handelt.

6. Luftdurchtrittsvorrichtung nach einem der Ansprüche 1 bis 5,
**dadurch gekennzeichnet,**
**dass** Steuerelement (330) auf der Innenwand des Grundgehäuses (21) angeordnet ist.

7. Luftdurchtrittsvorrichtung nach einem der Ansprüche 1 bis 6,
**dadurch gekennzeichnet,**
**dass** wenigstens ein Anschlusselement (320) vorgesehen ist, wobei es sich bevorzugt um ein Anschlusselement für eine Stromzufuhr und/oder ein Anschlusselement für eine Signalübertragung handelt.

8. Luftdurchtrittsvorrichtung nach einem der Ansprüche 1 bis 7,
**dadurch gekennzeichnet,**
**dass** das Steuerelement (330) wenigstens ein elektronisches Bauteil aufweist.
